# EUROPÄISCHE PATENTSCHRIFT

(11) **EP 3 698 042 B1**
(45) Veröffentlichungstag und Bekanntmachung des Hinweises auf die Patenterteilung: **25.02.2026**
(21) Anmeldenummer: 18795314.6
(22) Anmeldetag: 15.10.2018
(51) Int. Cl.: F03G 7/08, F04B 43/02, F04B 43/08, F04B 45/04, F04B 45/06

(54) **VORRICHTUNG ZUR GEWINNUNG VON ENERGIE AUS DER KINETISCHEN ENERGIE VON KRAFTFAHRZEUGEN**
DEVICE FOR OBTAINING ENERGY FROM THE KINETIC ENERGY OF MOTOR VEHICLES
DISPOSITIF POUR PRODUIRE DE L'ÉNERGIE À PARTIR DE L'ÉNERGIE CINÉTIQUE DE VÉHICULES AUTOMOBILES

(30) Priorität: 16.10.2017 DE 102017123961
(43) Veröffentlichungstag der Anmeldung: 26.08.2020
(73) Patentinhaber: Padera, Josef, 6971 Hard (AT)
(72) Erfinder: Padera, Josef, 6971 Hard (AT)
(74) Vertreter: Riebling, Peter
(86) Internationale Anmeldenummer: PCT/EP2018/078029
(87) Internationale Veröffentlichungsnummer: WO 2019/076795

(56) Entgegenhaltungen:
- WO-A1-2006/106399
- WO-A2-2006/120645
- DE-A1- 10 124 722

## Beschreibung

Die Erfindung betrifft eine Vorrichtung zur Gewinnung von Energie aus der kinetischen Energie von Kraftfahrzeugen nach dem Oberbegriff des Patentanspruches 1.

Eine derartige Vorrichtung ist mit der auf den gleichen Anmelder zurückgehenden EP 1 149 242 B1 bekannt geworden.

Bei dieser bekannten Vorrichtung sind in einem in der Fahrbahn eingebauten, horizontalen Rahmen eine Anzahl von mit ihren Längsachsen in Fahrtrichtung ausgerichteten zusammendrückbaren Schläuchen vorgesehen, welche durch das Gewicht des darüber rollenden Kraftfahrzeugreifens zusammengedrückt werden.

Durch den Kompressionsdruck des Kraftfahrzeugreifens auf die in ihrem Querschnitt sich verändernden elastomeren Schläuche wird ein bestimmter Druckstoß im jeweiligen Schlauch und dem dort enthaltenen Medium induziert. Der Druckstoß wird über geeignete Rückschlagventile einer Energiegewinnungsmaschine zugeführt, die beispielsweise ein pneumatisch angetriebener Generator sein kann oder ein hydraulisch angetriebener Generator, eine Turbine oder andere Energiegewinnungsmittel, mit dem es möglich ist, mit dem Druckstoß eines Medium eine hydraulische, mechanische oder elektrische Energie zu erzeugen.

Nachteil bei der Vorrichtung nach der EP 1 149 242 B1 ist der geringe Energiewirkungsgrad, der unter anderem auch dadurch bedingt ist, dass sich die Schläuche bei einer vertikalen Kompression zusätzlich seitlich zusammendrücken und in einer horizontalen Ebene ausweichen Dadurch entstehen unerwünschte Reibungsverluste und eine Verminderung der Lebensdauer, weil im Bereich der in horizontaler Ebene verlaufenden Knicklinien eine Rissspannung erzeugt wird, die zu einem vorzeitigen Brechen der Schläuche führte. Dies auch aus dem Grund, weil der bekannte Druckkörper als in einem Rahmen eingespannte kompressible Schläuche ausgebildet war und die Anordnung nur durch eine folienartige, dünne Abdeckplatte abgedeckt war.

Der Wirkungsgrad der Kompression der dort gezeigten Schläuche war nicht optimal, weil der druckinduzierende Kraftfahrzeugreifen unmittelbar und ohne Zwischenschaltung eines Übertragungsgliedes, nämlich nur unter Zwischenschaltung einer Abdeckfolie, auf die Schläuche wirkte, was zu einer ungünstigen Druckübertragung auf die Schlauchanordnung führte. Dies vor allem dann, wenn der Kraftfahrzeugreifen in einer vertikalen Ebene versetzt und nicht fluchtend die Schlauchanordnung einwirkte.

Wegen der besonderen Anordnung der dort gezeigten Rückschlagventile bestand auch ein unerwünschter Lufttotraum, der den Kompressionsgrad des verdrängten Mediums beeinträchtigte.

Mit dem Gegenstand der US 4 409 489 B1 ist eine weitere Vorrichtung zur Gewinnung von Energie im Straßenverkehr bekannt geworden, bei der allerdings die gleichen Nachteile bestehen, dass nämlich das Gewicht des Kraftfahrzeugreifens unmittelbar auf die kompressiblen Schläuche wirkt, was zu einer starken Beanspruchung der Schläuche bei geringem Energiegewinnungsgrad führt.

Zwar ist bei dieser Druckschrift noch eine zusätzliche Schale vorhanden, welche eine Kompression der Schläuche verbessern soll, allerdings sind zwei einander gegenüberliegende Schalen vorhanden, die sich mit ihren seitlichen Kanten in das zusammendrückbare elastomere Profil eingraben und zu einer Verkürzung der Lebensdauer führen.

Der Schlauch ist allerdings im Querschnitt oval ausgebildet, was eine geringe Kompressibilität bei vermindertem Wirkungsgrad verursachte.

Die WO 2006 / 106 399 A1 offenbart eine Vorrichtung zur Gewinnung von Energie aus der kinetischen Energie von Kraftfahrzeugen nach dem Oberbegriff des Patentanspruchs 1. Ein ähnlich arbeitende Vorrichtung ist aus der WO 2006 / 120 645 A2 bekannt.

Die DE 101 24 772 A1 zeigt eine Vorrichtung mit einer dachförmigen Abdeckung die beim Überfahren mit einem Kraftfahrzeug zusammenklappt und die Kraft über eine Stütze auf einen schlauchförmigen Druckkörper überträgt.

Der Erfindung liegt deshalb die Aufgabe zugrunde, eine Vorrichtung zur Gewinnung von Energie aus der kinetischen Energie von Kraftfahrzeugen so weiterzubilden, dass bei wesentlich höherer Lebensdauer der verwendeten Elemente ein höherer Wirkungsgrad erzielt werden kann.

Zur Lösung der gestellten Aufgabe ist die Erfindung durch die technische Lehre des Anspruches 1 gekennzeichnet.

Die Abdeckplatte ist als elastisch biegbare Biegeplatte ausgebildet ist, an deren Unterseite lastübertragend mindestens ein vertikal bewegbarer Druckstempel angeordnet ist, der in die Ausnehmung der Betonwanne eingreift und auf die Oberseite eines dort angeordneten kompressiblen Druckkörpers einwirkt.

Der kompressible Druckkörper ist als elastisch vorgespannte Membran ausgebildet.

Die befahrbare Oberfläche des Energiegewinnungselementes besteht demnach aus einer elastisch verformbaren Biegeplatte, die unmittelbar auf einen darunter liegenden Druckstempel einwirkt, der in vertikaler Richtung auf die Oberseite des Druckkörpers wirkt, der bevorzugt als blasenförmige Membran ausgebildet ist, die in einen Druckraum hinein verdrängbar ist, der durch eine Ausnehmung in einer Betonwanne gebildet ist.

Mit der gegebenen technischen Lehre ergibt sich der Vorteil, dass eine zwangsgeführte Druckerzeugung dadurch erreicht wird, dass eine elastisch biegbare Biegeplatte als Auflagefläche für einen darüber rollenden Kraftfahrzeugreifen nun unmittelbar das Kraftfahrzeuggewicht einer Fahrzeugachse auf einen darunter liegenden Druckstempel überträgt, welcher Druckstempel in vertikaler Richtung verschiebbar geführt ist und der unmittelbar gegen eine gegen den Druckstempel vorgespannte Membran wirkt, die in einen betonwannenseitigen Druckraum hinein verdrängbar ist.

Der Druckstempel kann sich dabei über die gesamte Breite der Vorrichtung erstrecken und so das Fahrzeuggewicht der beiden Reifen einer darüber fahrenden Achse übertragen.

In einer anderen Ausführung können auch zwei unabhängig voneinander arbeitende Druckstempel das Fahrzeuggewicht der beiden Reifen einer Fahrzeugachse aufnehmen.

Durch die Zwangsführung zwischen der elastisch biegbaren Biegeplatte und dem darunter angeordneten Druckstempel ergibt sich somit nicht mehr der Nachteil, dass die genannten Druckelemente seitlich ausweichen können, wie dies beim Stand der Technik der Fall war. Bei der Erfindung erfolgt eine unmittelbare vertikale Kraftübertragung, ohne das seitliche Biege- oder Reibungskräfte vorhanden wären, welche den Wirkungsgrad der Einrichtung beeinträchtigen.

Durch die Verwendung einer einseitig eingespannten Membran, die allseitig am Umfang abgedichtet in einem Halterahmen eingespannt ist, ergibt sich der Vorteil, dass die Membran nicht auf Knickung beansprucht wird und keinerlei Bruchkanten ausbildet, die zu einer Verkürzung der Lebensdauer führen.

Als Medium, welches inkompressibel oder kompressibel sein kann, werden verschiedene Fluide verwendet.

In einer ersten Ausgestaltung kann es vorgesehen sein, dass das kompressible Medium als Luft oder Gas ausgebildet ist, wobei in einem solchen Fall die Luft oder das Gas als kompressibles Medium ausgebildet ist. Es kann z. B. auch ein Edelgas oder ein inertes Gas verwendet werden, welches die Membran nicht angreift.

In einer anderen Ausgestaltung kann es vorgesehen sein, dass als Fluid eine nicht kompressible Flüssigkeit verwendet wird, wie z. B. ein Hydrauliköl, Wasser oder andere Trägermedien.

Allen Ausführungsformen ist gemeinsam, dass ein hoher Wirkungsgrad dadurch erzielt wird, dass die Gewichtskraft eines die Biegeplatte überfahrenden Kraftfahrzeugreifens nun unmittelbar und reibungsarm auf einen darunter liegenden vertikal bewegbaren und in seiner Vertikalbewegung geführten Druckstempel übertragen wird, welcher seinerseits mit seiner Unterseite auf die biegbare Oberfläche der Membran presst.

Somit wird die Membran in die, in einer Betonwanne ausgebildete Ausnehmung hinein verdrängt, die als Druckraum ausgebildet ist. In den Druckraum münden mediumleitend mindestens ein Ausströmrohr und ein Einströmrohr hinein und die beiden Rohre sind jeweils durch entgegengesetzt wirkende Rückschlagventile abgedichtet.

Somit wird gewährleistet, dass bei der Verformung der Membran in den Druckraum hinein, dessen Volumen fast vollständig verdrängt wird. Die am Eingang des Auslassrohrs erzeugte Druckspitze wird durch die Öffnung des dort angeordneten Rückschlagventils in einen zugeordneten Druckspeicher eingeleitet. Ein solcher Druckspeicher kann ein Tank sein oder eine direkt dort angeschlossene Arbeitsmaschine, wie z. B. ein Strömungsgenerator, eine Turbine, ein Luftmotor oder ein Hydraulikmotor, eine mit Drehkolben- oder Hubkolben arbeitende Arbeitsmaschine oder dergleichen.

Es ist auch möglich, einen solchen Motor als Drehkolbenmotor auszubilden, wobei der Drehkolbenmotor durch die Druckstöße des aus dem Auslassrohr ausgelassenen Druckmediums drehend angetrieben wird und damit z. B. einen elektrischen Generator antreibt.

Vorteil der erfindungsgemäßen Maßnahmen ist also die relativ reibungsarme Übertragung der Gewichtskraft eines Kraftfahrzeugreifens über eine biegbare Biegeplatte, die unmittelbar auf die zwei darunter liegenden Druckstempel arbeitet, die reibungsarm vertikal bewegbar geführt sind und die unmittelbar auf die Oberfläche einer entgegen gewölbt gerichteten Membran wirken.

Die Membran steht bevorzugt unter einem definierten Vordruck, was bedeutet, dass zunächst der Vordruck in der Membran durch die Gewichtskraft des Reifens überwunden werden muss und sich die Membran stets in ihre hochgewölbte Grundstellung zurückstellt, wenn sie in den Druckraum hineinverdrängt wurde.

Statt der Verwendung einer einseitigen, umlaufend abgedichteten Membran, deren Unterseite durch die Oberfläche eines das Arbeitsmedium führenden Druckraums gebildet ist, kann es in einer zweiten Ausführungsform vorgesehen sein, dass die Bodenseite des Druckraums durch eine zweite Membran mediumdicht abgeschlossen ist.

Die Verwendung einer einschichtigen Membran wird jedoch bevorzugt, weil sich herausgestellt hat, dass nur bei einer einschichtigen Membran Quetschfalten und Rissbildungen vermieden werden, wie sie bei Schläuchen in Kauf genommen werden müssen.

In einer bevorzugten Ausgestaltung ist es vorgesehen, dass das Druckprofil an der Unterseite des Druckstempels konvex ausgebildet ist und auf die konkave Oberfläche der gegenüberliegenden Membran drückt, wobei die Membran in ein Aufnahmeprofil in der Betonwanne hinein gepresst wird und dieses Aufnahmeprofil ebenfalls bevorzugt konkav mit der etwa gleichen Profilform wie die Unterseite des Druckstempels ausgebildet ist.

Das konvexe Druckprofil des jeweiligen Druckstempels verdrängt die Membran spaltfrei und formfüllend in das konkaves Aufnahmeprofil in der Betonwanne, wobei die beiden Profile sich gegenseitig ergänzen.

Insgesamt kann die Energieerzeugungseinrichtung nach der vorliegenden Erfindung als Energietransferplatte bezeichnet werden, weil eine Energiewandelung von der kinetischen Energie von Fahrzeugreifen in eine Druckenergie eines Druckmediums stattfindet. Die erzeugte Druckenergie wirkt auf einen geeigneten Energiewandler, der wahlweise oder kumulativ eine elektrische, pneumatische, hydraulische oder potentielle mechanische Energie erzeugt.

Der Energiewandler ist in einem geeigneten Maschinenraum angeordnet, welcher die entstehende Druckenergie des Arbeitsmediums in eine geeignete, weiterleitbare und speicherbare Energie umwandelt.

In einer ersten Ausgestaltung ist es vorgesehen, dass der Energiewandler als Drehmotor, Hydraulikmotor, Druckluftmotor oder dergleichen ausgebildet ist, wobei diese Motoren einen geeigneten elektrischen Generator antreiben können.

In einer anderen Ausgestaltung kann es vorgesehen sein, dass die in den Maschinenraum eingeleitete Druckenergie in einen dort angeordneten Druckspeicher eingeleitet wird.

In einer zweiten Ausführungsform kann es auch vorgesehen sein, dass ein solcher Druckspeicher unter der Energietransferplatte, d. h. im Unterbau der Straße, angeordnet ist.

Ein solcher Druckspeicher kann großvolumig ausgebildet sein und sich über eine längere Straßenstrecke und eine größere Einbautiefe erstrecken. Er kann deshalb über einen längeren Zeitraum die von der Energietransferplatte erzeugte Energie aufnehmen und speichern, sowie bei Bedarf wieder abgegeben.

Es wird schließlich noch angemerkt, dass statt der Erzeugung von elektrischer Energie auch eine mechanische Energie in Form der Anhebung eines geeigneten mechanischen Gewichtes stattfinden kann, wodurch potientielle Energie erzeugt wird.

Ebenso kann eine Energieumwandlung in Form eines Pumpspeicherwerkes stattfinden, was bedeutet, dass der Druckstoß des eingeleiteten Arbeitsmediums unmittelbar auf die Pumpen eines Pumpspeicherwerkes arbeitet.

Schließlich wird darauf hingewiesen, dass die Erfindung nicht auf eine bestimmte Länge der verwendeten Membranen beschränkt ist.

Typische Längen von Energietransferplatten sind etwa 10 Meter oder mehr, worauf die Erfindung jedoch nicht beschränkt ist.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert die Draufsicht auf eine Vorrichtung zur Gewinnung von Energie
- Figur 2:: die gleiche Vorrichtung wie in Figur 1 mit Darstellung des Überlappungsstoßes von sich überlappenden Biegeplatten, die in Fahrtrichtung hintereinanderliegend angeordnet sind
- Figur 3:: schematisiert die Vorrichtung nach Figur 1 im entspannten Zustand in Stirnansicht (senkrecht zur Fahrtrichtung)
- Figur 4:: die Vorrichtung nach Figur 3 im Lastzustand in Stirnansicht (senkrecht zur Fahrtrichtung)
- Figur 5:: eine Abwandlung der Vorrichtung nach Figur 1 mit anders geformten Membranen, die der Erfindung entsprechen
- Figur 6:: eine erfindungsgemäße Abwandlung der Ausführungsform nach Figur 5
- Figur 7a:: ein Teilschnitt durch die Vorrichtung im entlasteten Zustand
- Figur 7b:: ein Teilschnitt durch die Vorrichtung nach Figur 7a im belasteten Zustand mit Abwandlung verschiedener Einzelteile
- Figur 8a:: eine gegenüber Figur 7a, 7b abgewandelte Ausführungsform
- Figur 8b:: der belastete Zustand nach Figur 8a
- Figur 9:: eine gegenüber den vorher genannten Ausführungsbeispielen abgewandelte Ausführungsform, bei welcher die Membran durch einen kompressiblen Schlauch ersetzt ist
- Figur 10:: der Verbindungsbereich in Längsrichtung zwischen einander anschließenden Biegeplatten und Druckstempeln
- Figur 11:: schematisiert die Darstellung , die nicht Teil der Erfindung ist, eines kompressiblen Schlauches beim Überfahren im Lastzustand
- Figur 12:: die gleiche Darstellung wie Figur 11 mit einer Abwandlung bezüglich der Rückschlagventile
- Figur 13:: eine weitere Abwandlung gegenüber Figur 11 und 12
- Figur 14:: schematisiert das Druck-Zeit-Diagramm
- Figur 15:: schematisiert die Formgebung der Membran mit deren Einspannung in einem Halterahmen
- Figur 16:: perspektivische Darstellung des Druckstempels in zwei verschiedenen Ausführungen
- Figur 17:: schematisierte Darstellung verschiedener Möglichkeiten der Energieumwandlung und Speicherung
- Figur 18:: Draufsicht auf eine Energietransferplatte

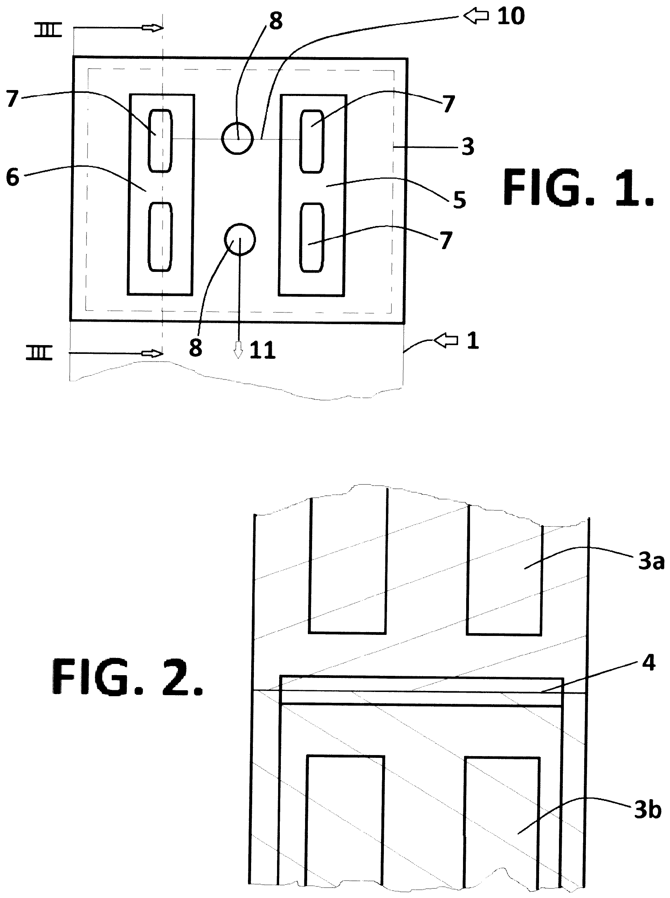

In Figur 1 und Figur 2 ist schematisiert die Draufsicht auf eine Vorrichtung zur Energiegewinnung gezeigt. Es ist lediglich schematisiert dargestellt, dass in einer U-förmig profilierten, nach oben offenen Betonwanne 1, die in einen Straßengrund 2 eingelassen ist. Der hier verwendete Begriff "Betonwanne" ist nicht eingeschränkt auf das Material "Beton" zu verstehen. Es kann jeder beliebige, wannenförmige, nach oben offene Körper in die Fahrbahn eingelassen werden, unabhängig davon, aus welchem Material er besteht. Der Begriff "Betonwanne" wird demnach stellvertretend für sämtlichen wannenförmigen Körper verwendet.

Auf der Betonwanne 1 ist eine Biegeplatte 3 angeordnet, welche die nach oben geöffnete Betonwanne 1 abdeckt. Die Biegeplatte 3 ist in gestrichelten Linien in Figur 1 dargestellt.

Die Figur 2 zeigt, dass in Fahrtrichtung 11 hintereinander liegende Biegeplatten 3a, 3b einen Überlappungsstoß 4 bilden, um ein ruckfreies Überfahren der Biegeplatten 3 in Fahrtrichtung 11 zu ermöglichen.

In Figur 1 ist schematisiert ein Kraftfahrzeug dargestellt, das jedoch lediglich mit seinem Reifen 7 und seinen beiden Achsen 8 dargestellt ist, wobei die Reifen 7 einer Achse gleichzeitig auf die Biegeplatte 3 auffahren und die Reifen der Vorderachse und danach die Reifen der Hinterachse die Biegeplatte elastisch zusammendrücken. Es wird bevorzugt, wenn die Länge der Biegeplatte 3 in Fahrtrichtung größer ist als der Achsabstand von straßenüblichen Kraftfahrzeugen.

Es kann in einer anderen Ausführung jedoch auch vorgesehen sein, dass die Länge der Biegeplatte 3 in Fahrtrichtung kürzer ist als der Achsabstand straßenüblicher Kraftfahrzeuge.

Die Breite der Biegeplatte 3 - senkrecht zur Fahrtrichtung - sollte größer sein als der Reifenabstand der Reifen (Abstand der Reifenaufstandsfläche) einer Achse von straßenüblichen Kraftfahrzeugen.

Im Ausführungsbeispiel nach Figur 1 sind unter einer, die gesamte Fläche der Betonwanne 1 abdeckenden Biegeplatte 3 zwei zueinander parallele Druckstempel 5, 6 vorgesehen, welche die Durchbiegung der Biegeplatte 3 aufnehmen und auf darunter liegende Membranen 9, 9a, 9b übertragen.

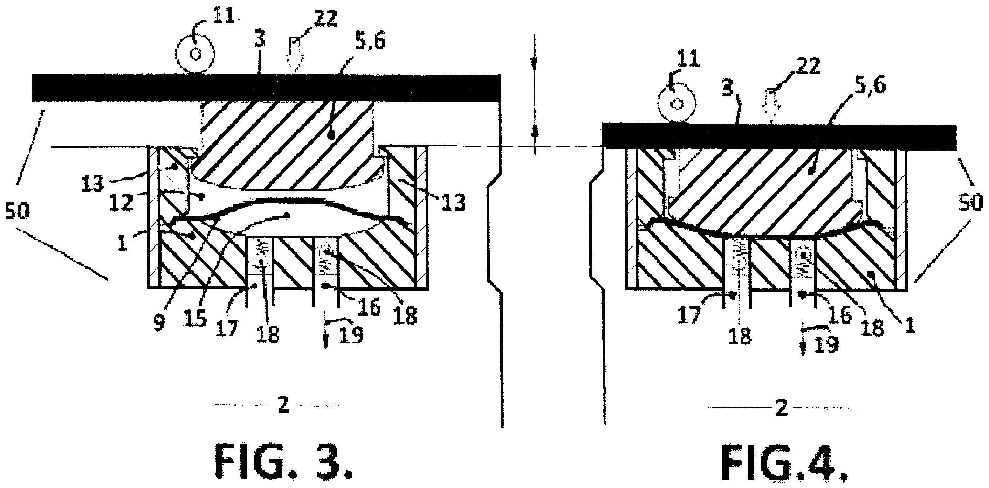

Dies ist in den Figuren 3 und 4 dargestellt, wo erkennbar ist, dass der jeweilige Druckstempel 5, 6 in eine Ausnehmung 12 in der Betonplatte 1 hinein verdrängbar ist und in dieser Ausnehmung 12 eine druckvorgespannte, konvex gewölbte Membran angeordnet ist, die bei einer Kompression durch den Druckstempel 5, 6 in Pfeilrichtung 22 nach unten in den Druckraum 15 der Betonwanne 1 verdrängt wird, wie dies in Figur 4 dargestellt ist.

Bei der Figur 3 und 4 ist im Übrigen noch wesentlich, dass die druckabgebende Seite des jeweiligen Druckstempels 5, 6 ein konkaves Druckprofil 65 aufweist, welches dem konvexen druckaufnehmenden Profil der jeweiligen Membran 9 entgegengesetzt ist und zu diesem komplementär ist.

Ferner ist die Bodenseite der Betonwanne 1 ebenfalls mit einem konkaven Aufnahmeprofil 66 ausgebildet, so dass sich das konvexe Druckprofil 65 des jeweiligen Druckstempels 5, 6 spiel- und totraumfrei in das Aufnahmeprofil 66 an der Bodenseite der Betonwanne 1 einsenkt, wie dies in Figur 4 dargestellt ist.

Die jeweilige Biegeplatte 3 ist in paralleler Richtung zur Fahrtrichtung jeweils seitlich an den Seitenwänden der Betonplatte 1 eingespannt und kann entweder als ebene Biegeplatte 3 ausgebildet sein und ebenfalls konvex gewölbt sein.

Wichtig ist, dass der jeweilige Druckstempel 5, 6 unmittelbar unter der Biegeplatte 3 befestigt ist mit seitlichen Ansätzen 14 in der Ausnehmung 12 der Betonwanne 1 verschiebbar geführt ist und somit eine Bewegung in Pfeilrichtung 22 in die Ausnehmung 12 unter geringen Reibungsverlusten ausführt.

Damit wird die konvex gewölbte Membran 9 in vertikaler Richtung nach unten verformt und das Volumen des Druckraumes 15 nimmt schlagartig ab und das dort befindliche Arbeitsfluid wird schlagartig verdrängt.

Das dort im Druckraum 15 vorhandene Arbeitsfluid (Medium) wird somit unter Überwindung eines federbelasteten Rückschlagventils 18 über das Auslassrohr 16 in einen nicht näher dargestellten Tank oder einen anderen Druckspeicher eingeführt oder wirkt direkt auf eine dort angeordnete Kraftmaschine.

Beim Zurückstellen der Membran 9 in ihrer Ruhestellung wird das Arbeitsfluid über das Einlassrohr 17 in den Druckraum 15 zurück gesaugt. Im Einlassrohr 17 das federbelastete Rückschlagventil 18 angeordnet, welches in entgegengesetzter Richtung wie das vorher genannte Rückschlagventil im Auslassrohr 16 wirkt. Auf diese Weise wird das Medium aus dem Einlassrohr 17 aus einem nicht näher dargestellten Tank nachgesaugt. Die Nachsaugung kann allein aufgrund der elastischen Verformungskraft der Membran erfolgen.

In einer Weiterbildung kann es jedoch vorgesehen sein, dass die Rückstellung der Membran 9, 9a, 9b in ihre konvexe Ruhestellung durch einen Druckstoß des Arbeitsfluids in den Druckraum 15 hinein erfolgt, der die Membran 9, 9a, 9b wieder "aufbläst".

Es sind seitliche Anschlagelemente 13 vorhanden, die besonders reibungsarm ausgebildet sind und z. B. aus Kunststoffelementen mit vorteilhaft reibungsarmen Gleitflächen bestehen, um so eine reibungsarme Verschiebung des Druckstempels 5, 6 in die Ausnehmung 12 zu ermöglichen.

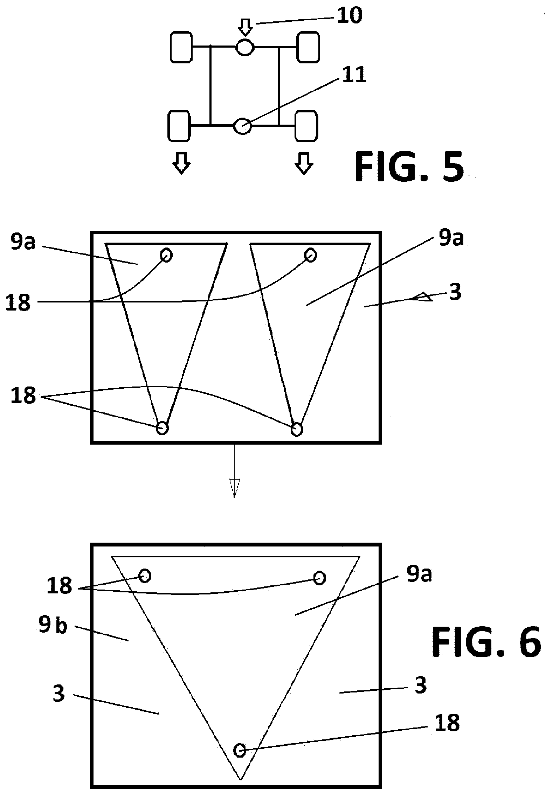

Die Figuren 5 und 6 zeigen Abwandlungen der Membran 9 in Draufsicht, entsprechend der Erfindung. In Figur 5 ist gezeigt, dass die Membran 9a dreiecksförmig ausgebildet ist, wobei die größere Aufstandsfläche in Fahrtrichtung vorn und die kleinere Aufstandsfläche in Fahrtrichtung hinten ist, so dass damit eine anfänglich erhöhte Druckspitze von dem Fahrzeug 10, welches in Fahrtrichtung 11 fährt, in Richtung auf das auslassseitig angeordnet Rückschlagventil 18 erzeugt wird. Somit wird der Wirkungsgrad der Verdichtung im Druckraum 15 gesteigert.

Die Figur 6 zeigt in der Abwandlung zur Ausführungsform nach Figur 5, dass nicht zwei voneinander getrennte Membranen 9a vorhanden sein können, die jeweils einer Seite des Fahrzeuges 10 zugeordnet sind, sondern dass eine gemeinsame dreiecksförmige Membran 9b vorgesehen sein kann.

Gleiches gilt im Übrigen auch für die Darstellungen in Figur 1, wo entweder zwei voneinander getrennte Membranen 9 mit zwei voneinander getrennten Druckstempeln 5, 6 beaufschlagt sein können oder auch eine durchgehende wie sie als Dreiecksform als Membran 9b in Figur 6 dargestellt ist.

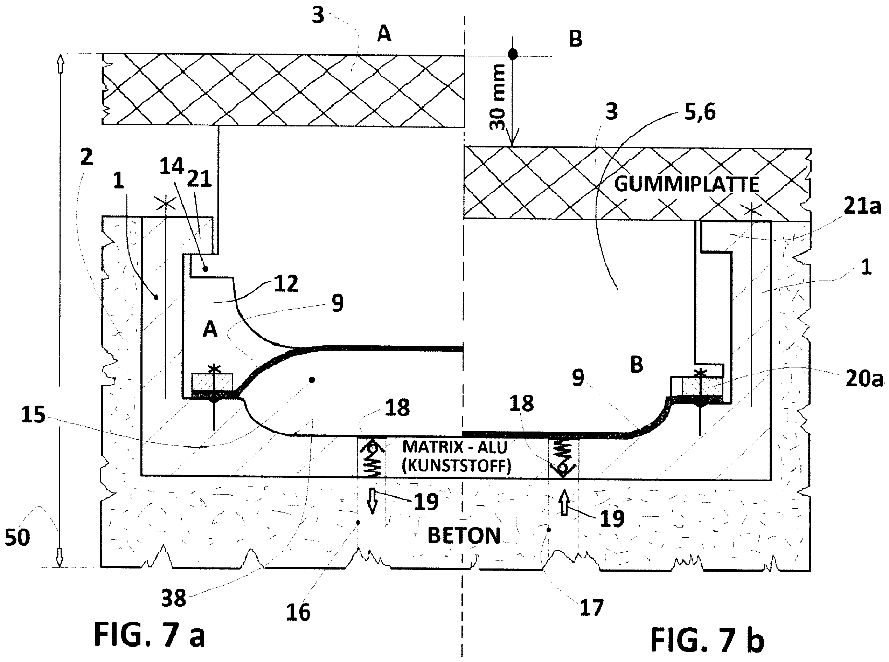

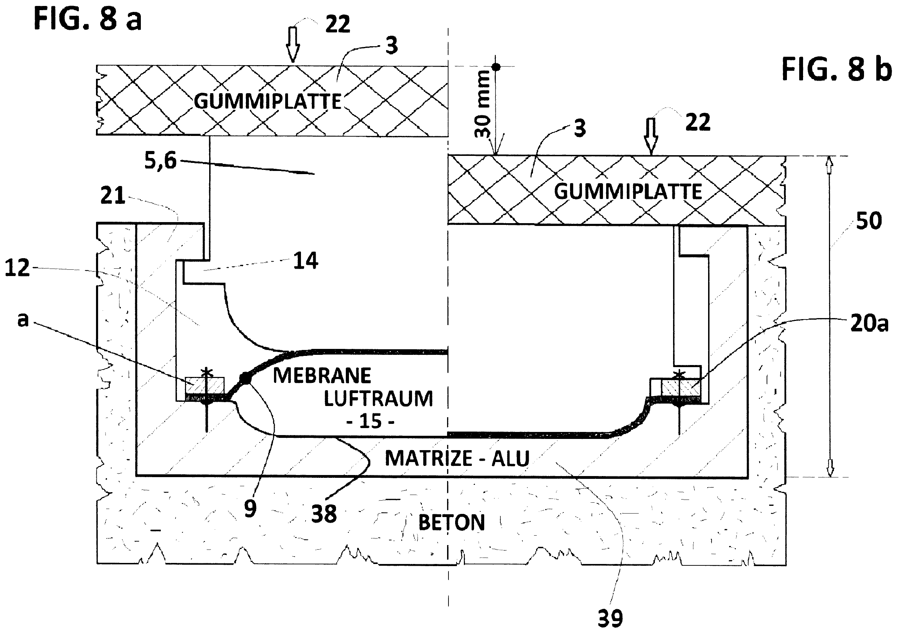

Die Figuren 7a und 7b, sowie die Figuren 8a und 8b zeigen jeweils den entlasteten und den belasteten Zustand, wo erkennbar ist, dass die Bodenseite des Druckraumes 15 von der Betonwanne 1 selbst gebildet ist.

In einer anderen Ausführungsform kann es jedoch auch vorgesehen sein, dass diese Oberfläche 38 durch eine Gummioberfläche oder durch die Oberfläche einer zweiten Membran ausgekleidet ist.

In den Druckraum 15 münden die vorher erwähnten Ein- und Auslassrohre 16, 17, in denen jeweils entgegengesetzt gerichtete Rückschlagventile 18 angeordnet sind.

Die Figuren 7a und 7b zeigen ferner, dass der Druckstempel 5, 6 unmittelbar an der Unterseite der Biegeplatte 3 angeordnet ist, wobei die mit einem Hochstrich versehenen Teile in Figur 7b den Belastungsfall darstellen.

Ferner zeigt die Figur 7a, dass die Einspannung der Membran 9 durch einen Klemmblock 20 erfolgt, der gleichzeitig an seiner Oberseite einen einwärts gerichteten vertikalen Anschlag 21 für den zugeordneten Ansatz 10 des Druckstempels 5, 6 bildet.

Auf diese Weise wird dafür gesorgt, dass der Druckstempel 5, 6 in seiner angehobenen Stellung - entgegen der Pfeilrichtung 22 - anschlagbegrenzt ist. In der rechten Seite der Figur 7b ist dargestellt, dass statt des Klemmblocks 20 auch eine einfache Klemmleiste 20a verwendet werden kann und der Anschlag 21 durch eine Anschlagleiste 21a gebildet sein kann.

Ansonsten gelten für die gleichen Teile die gleichen Bezugszeichen.

Die Figuren 8a und 8b zeigen wiederum einen Belastungs- und einen Entlastungszustand, wobei die gleichen Teile mit den gleichen Bezugszeichen versehen sind.

Es ist erkennbar, dass der Druckstempel 5, 6 einen anders geformten seitlichen vertikalen Anschlag 14 bildet, der mit einem zugeordneten gehäusefesten Anschlag 21 zusammenwirkt.

Auch ist hier die Membran 9 in anderer Weise mit der Klemmblockleiste 20a eingespannt.

Es ist noch dargestellt, dass die Bodenseite des Druckraumes 15 nicht durch die Betonoberfläche 38 der Betonwanne 1 gebildet ist, sondern die Betonoberfläche wird durch eine Matrize 39 abgedeckt, die eine besonders glatte Oberfläche 38 bildet. Die Matrize 39 besteht bevorzugt aus einem Aluminiummaterial oder einer reibungsarmen Kunststoffbeschichtung.

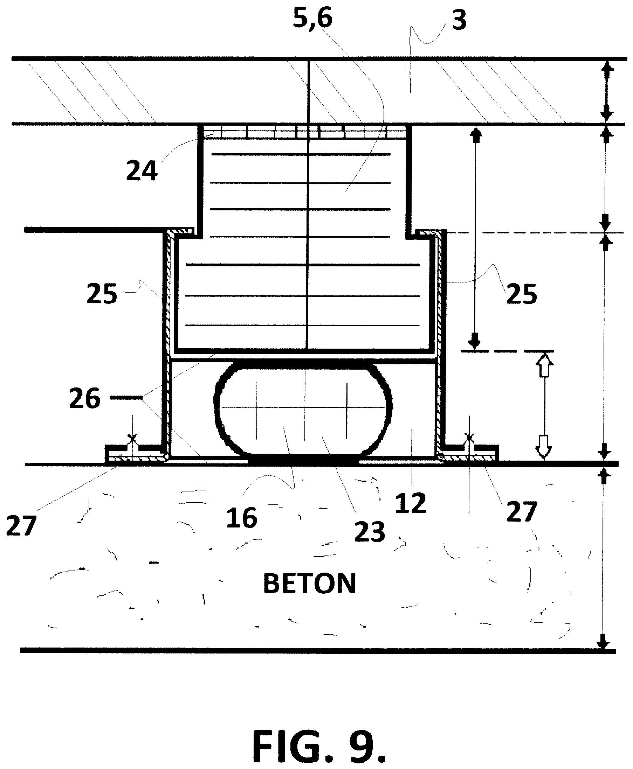

In den Figuren 9 bis 13 wird als ein Beispiel, das nicht Teil der Erfindung zu der vorher beschriebenen einseitigen Membran 9 nunmehr die Verwendung eines Schlauchkörpers 23 beschrieben, der entweder als ovaler Schlauchkörper ausgebildet sein kann und der - nicht zeichnerisch dargestellt - auch seitliche, in horizontaler Richtung verlaufende, zueinander parallele Falten ausbilden kann, um einen blasebalgartigen Faltenkörper zu bilden.

Ansonsten gelten für die gleichen Teile die gleichen Bezugszeichen, wobei in Figur 9 dargestellt ist, dass die Ausnehmung 12 durch zwei seitliche Anschlagprofile 25 begrenzt ist, und die Bodenfläche der Ausnehmung 12 durch eine Gleitfolie ausgekleidet ist, um so ein besonders günstiges und kraftarmes Zusammendrücken des Schlauchkörpers 23 zu gewährleisten.

Ebenso zeigen die Bezugszeichen 26 auf jeweils deckenseitig oder oberseitig des Schlauchkörpers 23 angeordnete Gleitfolien hin.

Es ist ebenso dargestellt, dass im Zwischenraum zwischen der Unterseite der Biegeplatte 3 und der Oberseite des Druckstempels 5, 6 eine Gleitfolie 24 angeordnet ist.

Die seitlichen Anschlagprofile 25 bilden somit sowohl den Höhenanschlag für den Druckstempel 5, 6, aber auch die seitliche Begrenzung des Druckraumes 15.

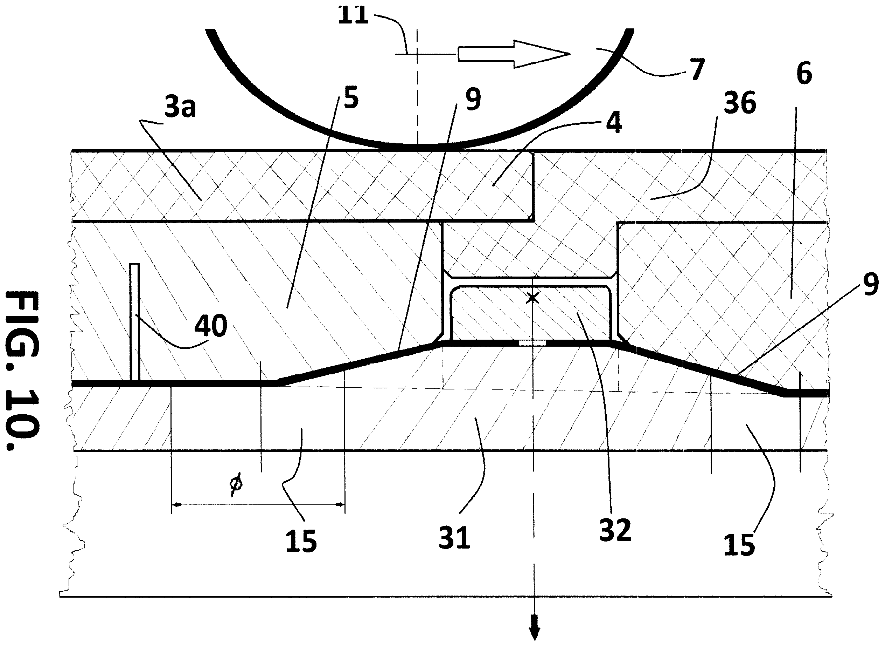

Die Figur 10 zeigt ein Ausführungsbeispiel einer Membran 9 im Verbindungsbereich zwischen aneinander in Fahrtrichtung anschließenden Membranen 9. Der Verbindungsbereich ist zwischen den Gummiplatten 3a, 3b durch den vorher schon genannten Überlappungsstoß 4 gebildet. Die in Fahrrichtung ausgebildete gegenseitige Verbindung der Membranen 9 erfolgt durch einen mittigen, sich quer zur Fahrtrichtung erstreckenden Verbindungskörper 32, an dessen Unterseite die jeweiligen quer zur Fahrtrichtung sich erstreckenden Kanten der einander anstoßenden Membranen 9 angeschlossen sind.

Der Verbindungskörper 32 liegt auf einem mittleren, sich quer zur Fahrtrichtung erstreckenden Lagerkörper 31 auf, der sich bevorzugt über die gesamte Breite der Ausnehmung 12 erstreckt.

Die Druckstempel 5, 6 sind deshalb im gegenseitigen Abstand hintereinander liegend in Fahrtrichtung angeordnet, wobei in den Gummistempeln 5, 6 noch biegungserleichternde Schlitze 40 vorhanden sein können.

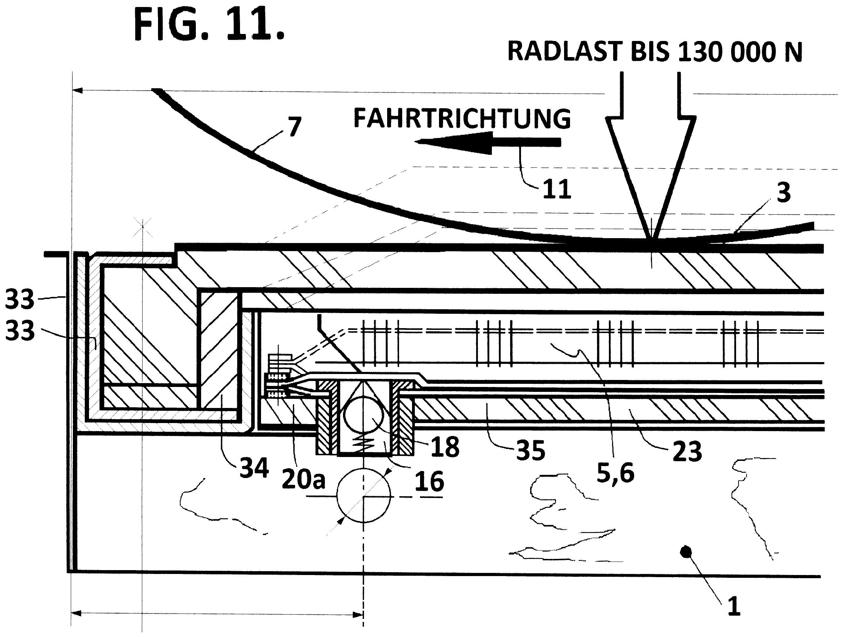

Die Figur 11 zeigt eine Abwandlung der Membran 9, 9a, 9b in Form eines kompressiblen Schlauchkörpers 23, wo erkennbar ist, dass das jeweilige Einlass- und Auslassrohr 16, 17 unterseitig an den Druckraum 15 anschließt und dort das jeweilige Rückschlagventil 18 angeordnet ist.

Die Darstellung zeigt auch die Verformung der Biegeplatte 3 beim Überfahren mit dem Reifen 7, der die Anordnung in Fahrtrichtung 11 überfährt.

Es sind noch Lagerböcke 34 vorhanden, die Teil eines Verbindungsprofils 33 sind, um so eine seitliche Lagerung der Biegeplatten 3, 3a, 3b zu gewährleisten.

Es ist auch erkennbar, dass die Betonwanne 1 oberseitig mit einem Gegenlager 35 ausgerüstet ist, dessen Oberfläche die Bodenseite des Druckraumes 15 ausbildet.

Wichtig bei diesem Ausführungsbeispiel ist, dass der Druckraum 15 im Innenraum des kompressiblen Schlauchkörpers 23 angeordnet ist und die Oberfläche des Gegenlagers 35 lediglich zur Druckverteilung dient und dort eine Gleitfolie angeordnet sein kann.

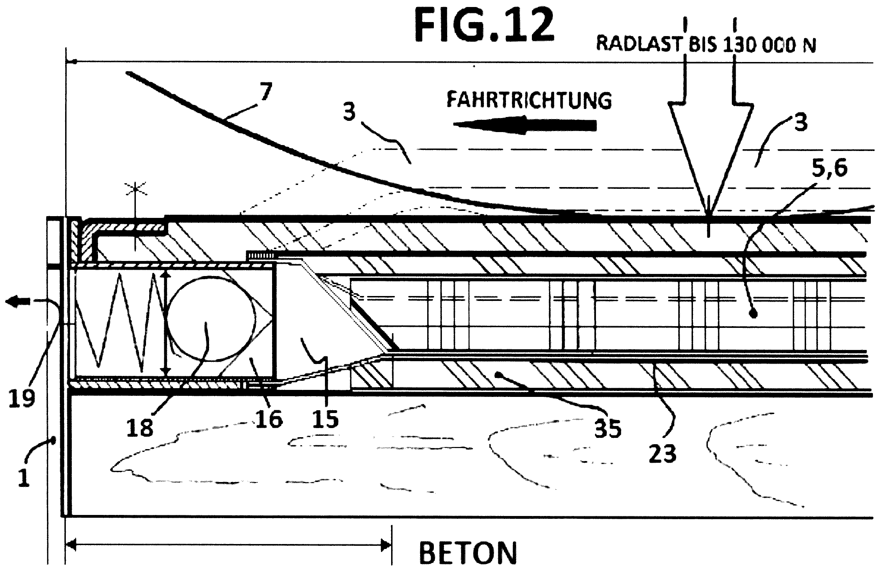

Im Gegensatz zur Figur 11 zeigt die Figur 12 einen seitlichen Anschluss der Aus- und Einlassrohre 16, 17, wobei lediglich in einem Ausführungsbeispiel dargestellt ist, dass der Druckraum 15 des Schlauchkörpers 23 in ein Auslassrohr 16 mündet, welches durch ein federbelastetes Rückschlagventil 18 abgeschlossen ist.

Die Figuren 11 und 12 zeigen jeweils in hochgestrichener Darstellung auch den Belastungszustand im Vergleich zum unbelasteten Zustand.

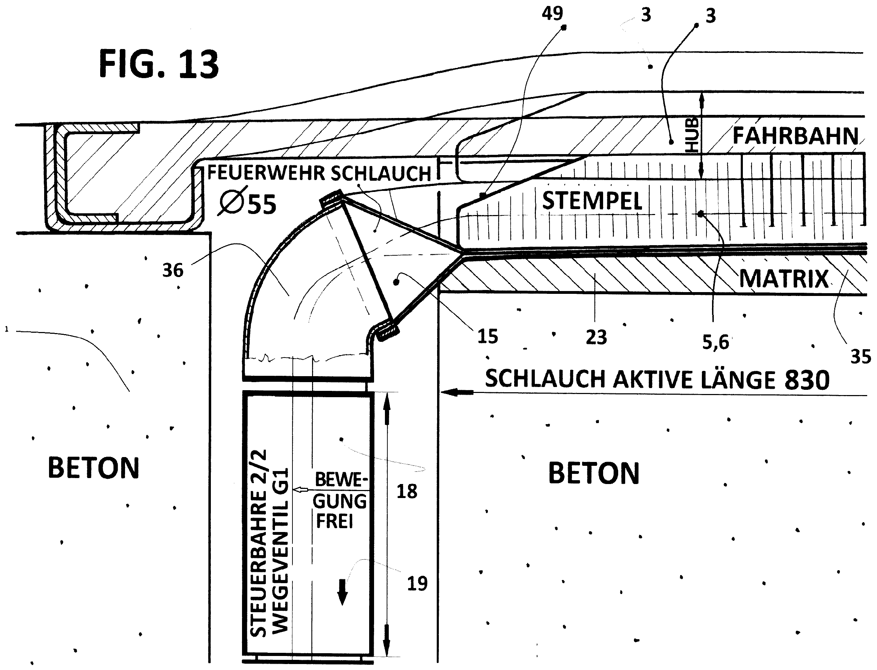

Die gleiche Darstellung ergibt sich auch aus Figur 13, wo erkennbar ist, dass der Druckraum 15 der Schlauchkörpers 23 seitlich in einen Anschlussschlauch 36 und in ein vertikal gerichtetes Rückschlagventil 18 übergeführt ist, sodass das Arbeitsfluid in Pfeilrichtung 19 den Druckraum 15 auslässt.

Zur Figur 13 wird noch nachgetragen, dass es bevorzugt wird, wenn die jeweils verwendeten Druckstempel 5, 6 in Fahrtrichtung gesehen jeweils mit Auflaufschrägen 49 versehen sind, um ein schlagartiges Aufstauchen der darüber liegenden Biegeplatten 3 und damit eine Ausbildung von unerwünschten Geräuschen zu vermeiden.

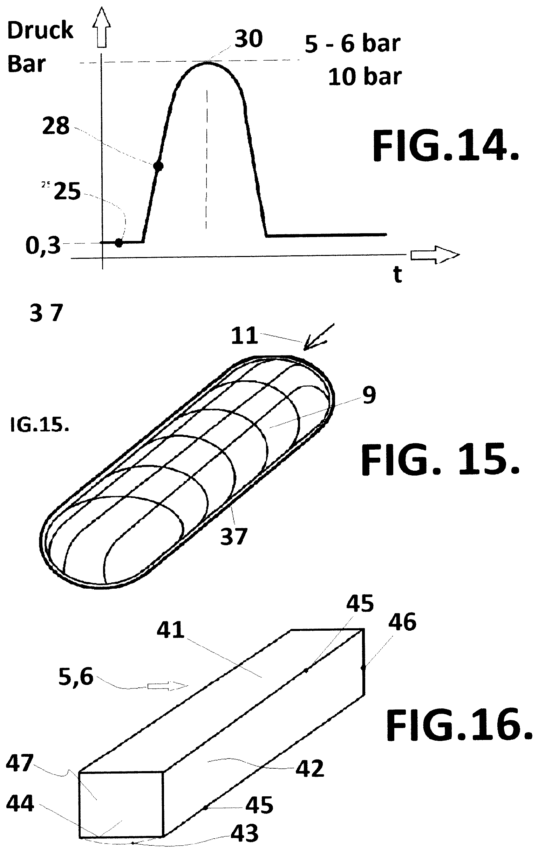

Die Figur 14 zeigt, dass sowohl die Membran 9 als auch der kompressible Schlauchkörper 23 unter einem Vordruck stehen, der beispielsweise als Vordruck 28 im Druck-Zeitdiagramm in Figur 14 eingetragen ist.

In einer bevorzugten Ausgestaltung kann der Vordruck z. B. 0,3 bar betragen. Der Vordruck sorgt dafür, dass die Membran 9 oder der Schlauchkörper 23 in der unbelasteten Stellung stets in die Ruhelage zurückgestellt werden. Es bedarf daher keiner elastischen Rückstellelemente.

Das Diagramm nach Figur 14 zeigt, dass ausgehend von einem Vordruck 28 die Druckkurve 29 bei Überfahren mit dem Reifen 7 auf ein Maximum 30 von z. B. im Bereich zwischen 5 bis 30 bar ansteigen kann, wobei ein typischer Wert im Bereich zwischen 5 bis 10 bar liegt.

Nach dem Überfahren mit dem Reifen 7 sinkt die Druckkurve wieder auf ein Minimum und der Vordruck 28 stellt sich dann wieder ein.

Die Figur 15 zeigt in perspektivischer Darstellung die Einspannung einer einschichtigen Membran 9, wo erkennbar ist, dass ein umlaufender Halterahmen 37 vorhanden ist, der die Membran allseitig einspannt und somit einen genau definierten Druckraum 15 bildet, der allseitig abgeschlossen ist und die Membran 9, 9a, 9b in ihrer konvex gewölbten Grundstellung hält.

Die Figur 16 zeigte mehrere mögliche Ausführungsformen eines Druckstempels 5,6 in perspektivische Ansicht. In einer 1. Ausführungsform kann der Druckstempel 5,6 als länglicher quaderförmige Körper ausgebildet sein, bei dem lediglich die Längskanten 45 an der Druck aufnehmenden Oberseite 41 und der Druck abgebenden Unterseite 42 abgerundet sind.

In einer ersten Ausgestaltung ist es vorgesehen, dass die unmittelbar auf die Oberfläche der Membran 9 wirkende Druck abgebende Unterseite 42 gerade und eben ausgebildet ist. Dies wird durch die eingezeichnete Gerade 44 symbolisiert.

In einer zweiten Ausgestaltung kann es vorgesehen sein, dass anstatt der gerade ausgebildeten, Druck abgebenden Unterseite 42, die unmittelbar auf die Oberseite der Membran 9 wirkt, nunmehr eine ballige Oberfläche 42 vorhanden ist, was durch den eingezeichneten Radius 43 symbolisiert ist.

Diese Oberfläche 42 ist somit konvex gerundet. In anderen Ausgestaltungen kann es vorgesehen sein, dass statt der konvexen Rundung der druckabgebenden Unterseite 42 eine konkaven Wölbung vorliegt.

Alle oben genannten Oberflächengestaltungen gelten auch für die Druck aufnehmenden Oberseite 41, die unmittelbar an der Unterseite der jeweiligen Biegeplatte 3, 3a, 3b anliegt. Diese Druck aufnehmenden Oberseite 41 kann demnach gerade, konvex oder konkav gewölbt sein.

Die Verbindung zwischen der Druck aufnehmenden Oberseite 41 des Druckstempels 5,6 und der Unterseite der auf dem Druckstempel aufliegenden Biegeplatte 3, 3a, 3b kann lose sein, so dass sich die beiden Teile lediglich lastübertragend berühren.

In einer anderen Ausgestaltung kann es vorgesehen sein, dass der jeweilige Druckstempel 5,6 unmittelbarer werkstoffeinstückig mit der Unterseite der Biegeplatte 3, 3a, 3b verbunden ist und mit dieser ein einziges, durchgehendes Teil bildet. Der Druckstempel 5, 6 ist in diesem Fall an die Unterseite der Biegeplatte angeformt.

Im gezeigten Ausführungsbeispiel nach Figur 16 ist im Übrigen dargestellt, dass die Längskanten 45 der Druck aufnehmenden Oberseite 41 und der Druck auf druckabgebenden Unterseite 42 zueinander parallel ausgebildet sind.

In einer anderen Ausgestaltung kann es vorgesehen sein, dass die Längskanten 45 der Oberseite 41 einen Winkel zu den Längskanten 45 der Unterseite 42 bilden, so dass der gesamte Körper des Druckstempels 5,6 in Fahrtrichtung 11 konisch ausgebildet ist.

Die in Fahrtrichtung 11 vorne liegende Stirnseite 46 des Druckstempels 5,6 hat demnach einen geringeren Querschnitt als vergleichsweise die in Fahrtrichtung 11 hinten liegende Stirnseite 47. Demnach erweitert sich die Körperkontur des Druckstempels 5, 6 von einem in Fahrtrichtung 11 kleineren Querschnitt auf einen in Fahrtrichtung 11 hinten liegenden, erweiterten Querschnitt, so dass der gesamte Körper des Druckstempels 5, 6 keilförmig oder konusförmig ausgebildet ist. Dies hat den Vorteil, dass aufgrund der konischen Form der Druckstempel 5, 6 einen in Fahrtrichtung 11 verlaufenden forcierten Druckstoß im Druckraum 15 unterhalb der Membran 9 erzeugt. Damit wird der Wirkungsgrad bei der Druckerzeugung im Druckraum verbessert.

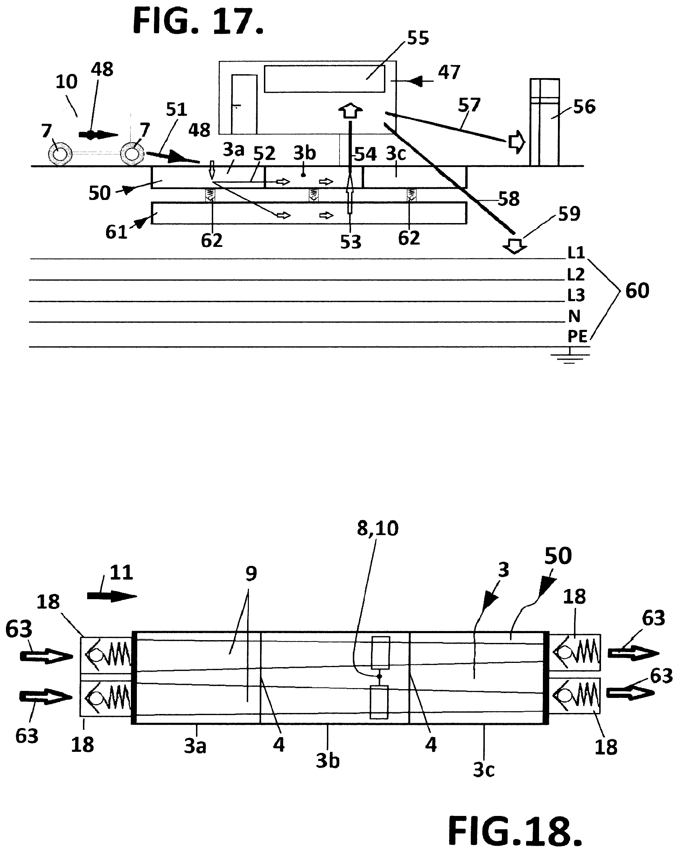

In Figur 17 sind schematisiert die verschiedenen Energieumwandlungsmöglichkeiten gezeigt.

Die vorher beschriebene Energieumwandlung erfolgt im Bereich der Energietransferplatte 50, die in einer Vielzahl von Ausführungsbeispielen beschrieben wurde. Das Fahrzeug 10 fährt demnach mit seinen Reifen 7 in Fahrtrichtung 11 über die Energietransferplatte 50 und erzeugt etwa bei Position 48 den Beginn der Energieumwandlung in Form eines Druckstoßes, der in der Energietransferplatte 50 erzeugt wird. Der Druckstoß 52 pflanzt sich somit in der eingezeichneten Pfeilrichtung fort und wird in Pfeilrichtung 53 umgelenkt und in eine Druckleitung 54 umgeleitet, die in einen Maschinenraum 47 mündet.

Im Maschinenraum 47 ist ein Energiewandler 55 angeordnet, so dass die in der Energietransferplatte 50 eingetragene kinetische Energie 51 des Fahrzeuges 10 nunmehr in den Druckstoß eines fluidischen Arbeitsmediums übertragen wird und der dort angeordnete Energiewandler 55 in der Lage ist, eine Energiewandlung auszuführen.

In einem ersten Ausführungsbeispiel ist dargestellt, dass über den Energiepfad 57 elektrische Energie vom Energiewandler 55 erzeugt wird, die beispielsweise einer Ladestation 56 zugeführt wird.

Über einen anderen, alternativen Energiepfad 58 wird beispielsweise die elektrische Energie als Drehstrom in Pfeilrichtung 59 in ein geeignetes Drehstromnetz 60 eingeleitet.

Die Figur 17 zeigt als weitere mögliche Ausführungsform auch noch, dass unterhalb der Energietransferplatte 50 ein Druckspeicher 61 im Straßenunterbau angeordnet sein kann, in den über Rückschlagventile 62 das in der Energietransferplatte 50 komprimierte und druckartig erzeugte Arbeitsmedium 62 eingeleitet werden.

Somit kann das Arbeitsmedium 61 unter hohem Druck im Druckspeicher 61 vorgehalten werden und bei Bedarf ausgelassen werden und beispielsweise über die Druckleitung 54 in den im Maschinenraum 47 angeordneten Energiewandler 55 eingeleitet werden.

Es ist allerdings nicht lösungsnotwendig, dass der Druckspeicher 61 im Straßenunterbau unterhalb der Energietransferplatte 50 angeordnet ist. Er kann auch als separates Element oberhalb des Straßenniveaus angeordnet sein und beispielsweise auch im oder neben dem Maschinenraum 47 angeordnet sein.

In der allgemeinen Beschreibung wurde auch darauf hingewiesen, dass der Energiewandler 55 auch eine potentielle mechanische Energie erzeugen kann, in dem beispielsweise ein Pumpspeicherwerk betrieben wird oder ein mechanisches Gewicht von einem unteren Hebeniveau auf ein oberes Hebeniveau gebracht wird.

Die Figur 18 zeigt in Draufsicht eine weitere bevorzugte Ausführungsform der Energietransferplatte 50, wo erkennbar ist, dass sich die Biegeplatten 3a, 3b, 3c über mehrere Überlappungsstöße 4 hinweg erstrecken, dass aber die zugeordneten Membranen 9 sich ohne Unterbrechung über mehrere Biegeplatten hinweg erstrecken und damit eine wesentlich größere Länge in Fahrtrichtung 11 aufweisen als beispielsweise die Länge der Biegeplatten 3, 3a, 3b, 3c selbst.

Ebenso ist erkennbar, dass es bevorzugt ist, wenn die Membranen 9 in Draufsicht eine etwa konusförmige Form aufweisen, d. h. deren Breite verringert sich in Fahrtrichtung 11 von einem breiteren Querschnitt in einen schmaleren Querschnitt. Damit kommt es zu einer Kompression des Arbeitsmediums, wenn ein Fahrzeugreifen, der lediglich schematisiert als Fahrzeug 10 mit seiner Achse 8 dargestellt ist, von dem breiteren Querschnitt der Membran 9 in der Biegeplatte 3a in den schmäleren Querschnitt der Membran 9 im Bereich der Biegeplatte 3c fährt.

Ebenso ist dargestellt, dass beispielsweise eine solche Energietransferplatte 50 eine Länge von insgesamt 10 Metern haben kann und es nur noch notwendig ist, eingangs- und ausgangsseitig der jeweiligen Energietransferplatte 50 geeignete Rückschlagventile 18 anzuordnen.

Damit kann die Anzahl der Rückschlagventile pro Energietransferplatte 50 reduziert werden.

Die Figur 18 zeigt außerdem, dass der Mediumstrom in Pfeilrichtung 63 auf der linken Seite aus einem nicht näher dargestellten Vorratsbehälter angesaugt wird, von den konisch zulaufenden Membranen 9 jeweils von jedem Reifen 7 jeder Achse verdrängt wird und schließlich als verdichteter Mediumstrom in Pfeilrichtung 63 aus den rechts dargestellten Rückschlagventilen 18 herausströmt.

### Zeichnungslegende

- 1: Betonwanne
- 2: Grund
- 3: Biegeplatte 3a, 3b
- 4: Überlappungsstoß
- 5: Druckstempel
- 6: Druckstempel
- 7: Reifen (von 10)
- 8: Achse
- 9: Membran 9a, 9b
- 10: Fahrzeug
- 11: Fahrtrichtung
- 12: Ausnehmung (von 1)
- 13: Anschlagelemente
- 14: Ansatz (von 5, 6)
- 15: Druckraum
- 16: Auslassrohr
- 17: Einlassrohr
- 18: Rückschlagventil
- 19: Pfeilrichtung
- 20: Klemmblock 20a
- 21: Anschlag 21a
- 22: Pfeilrichtung 22'
- 23: Schlauchkörper
- 24: Gleitfolie
- 25: Anschlagprofil
- 26: Gleitfolie
- 27: Befestigung
- 28: Vordruck
- 29: Druckkurve
- 30: Maximum
- 31: Lagerkörper
- 32: Verbindungskörper
- 33: Verbindungsprofil
- 34: Lagerblock
- 35: Gegenlager
- 36: Anschlussschlauch
- 37: Halterahmen
- 38: Oberfläche (von 15)
- 39: Matrize
- 40: Schlitz
- 41: Oberseite
- 42: Unterseite
- 43: Radius
- 44: Gerade
- 45: Längskante
- 46: Stirnseite
- 47: Maschinenraum
- 48: Position
- 49: Auflaufschräge
- 50: Energietransferplatte 50'
- 51: kinetische Energie
- 52: Druckstoß
- 53: Pfeilrichtung
- 54: Druckleitung
- 55: Energiewandler
- 56: Ladestrom
- 57: Energiepfad
- 58: Energiepfad
- 59: Pfeilrichtung
- 60: Druckstromnetz
- 61: Druckspeicher
- 62: Rückschlagventil
- 63: Pfeilrichtung
- 64 65: Druckprofil (von 5,6)
- 66: Aufnahmeprofil (von 1)

## Patentansprüche

1. Vorrichtung zur Gewinnung von Energie aus der kinetischen Energie von Fahrzeugen, die fahrbahnseitig von einer, von den Reifen (7) Fahrzeuges überfahrbaren Abdeckplatte abgedeckt ist, wobei in einer Ausnehmung (12) mindestens ein kompressibler Druckkörper (9, 9a, 9b) angeordnet ist, dessen Druckraum (15) mit einem Arbeitsfluid gefüllt ist, welches bei der Kompression des Druckkörpers (9, 9a, 9b) aus dem Druckraum (15) in Richtung auf einen Speicher und/oder eine Arbeitsmaschine verdrängbar ist, wobei ferner die Abdeckplatte als elastisch biegbare Biegeplatte (3, 3a, 3b) ausgebildet ist, an deren Unterseite lastübertragend mindestens ein vertikal bewegbarer Druckstempel (5, 6) angeordnet ist, der in die Ausnehmung (12) eingreift und auf die Oberseite des dort angeordneten kompressiblen Druckkörpers (9, 9a, 9b) einwirkt, wobei der Druckkörper als den Druckraum (15) umlaufend abdichtende Membran (9, 9a, 9b) ausgebildet ist, wobei die Vorrichtung eine versenkt in der Fahrbahn angeordnete, nach oben hin offenen Betonwanne (1) umfasst, in der die Ausnehmung (12) angeordnet ist und die Betonwanne (1) durch die Biegeplatte (3) nach oben hin abdeckt ist, wobei unter der die gesamte Fläche der Betonwanne (1) abdeckenden Biegeplatte (3) zwei zueinander parallele Druckstempel (5, 6) vorgesehen sind, welche die Durchbiegung der Biegeplatte (3) aufnehmen und auf die ein oder zwei darunter liegende Membrane (9, 9a, 9b) übertragen, **dadurch gekennzeichnet, dass** die Breite der Biegeplatte (3), senkrecht zur Fahrtrichtung, größer ist als ein Reifenabstand von Reifen einer Achse eines straßenüblichen Kraftfahrzeugs, und dass die ein oder zwei Membrane (9a, 9b) dreiecksförmig ausgebildet ist, wobei die größere Aufstandsfläche in Fahrtrichtung (11) vorn und die kleinere Aufstandsfläche in Fahrtrichtung (11) hinten ist.

2. Vorrichtung nach Anspruch 1, **dadurch gekennzeichnet, dass** die Membran (9, 9a, 9b) in der unbelasteten Stellung konvex gewölbt ist.

3. Vorrichtung nach Anspruch 1 oder 2, **dadurch gekennzeichnet, dass** die Membran (9, 9a, 9b) durch einen Vordruck im Druckraum (15) oder ein elastisches oder fluidisches Vorspannelement vorgespannt ist.

4. Vorrichtung nach einem der Ansprüche 1 bis 3, **dadurch gekennzeichnet, dass** sich der Druckstempel (5, 6) über die Breite der Vorrichtung erstreckt und das Fahrzeuggewicht der beiden Reifen einer Achse übertragen.

5. Vorrichtung nach einem der Ansprüche 1 bis 4, **dadurch gekennzeichnet, dass** die Bodenseite des Druckraums (15) durch eine zweite Membran mediumdicht abgeschlossen ist.

6. Vorrichtung nach einem der Ansprüche 1 bis 5, **dadurch gekennzeichnet, dass** in Fahrtrichtung (11) hintereinander liegende Biegeplatten (3a, 3b) einen Überlappungsstoß (4) bilden, um ein ruckfreies Überfahren der Biegeplatten (3) in Fahrtrichtung (11) zu ermöglichen.

7. Vorrichtung nach einem der Ansprüche 1 bis 6, **dadurch gekennzeichnet, dass** zur reibungsarmen Verschiebung der Druckstempel (5, 6) in die Ausnehmung (12) seitliche Anschlagelemente (13) vorhanden sind, die reibungsarm ausgebildet sind.

8. Vorrichtung nach Anspruch 7, **dadurch gekennzeichnet, dass** die Anschlagelemente (13) aus Kunststoffelementen mit reibungsarmen Gleitflächen bestehen.

9. Vorrichtung nach einem der Ansprüche 1 bis 8, **dadurch gekennzeichnet, dass** die Einspannung der Membran (9) durch einen Klemmblock (20) erfolgt, der an seiner Oberseite einen einwärts gerichteten vertikalen Anschlag (21) für einen zugeordneten Ansatz (10) des Druckstempels (5, 6) bildet.

10. Vorrichtung nach einem der Ansprüche 1 bis 9, **dadurch gekennzeichnet, dass** die Einspannung einer einschichtigen Membran (9, 9a, 9b) mit einem umlaufenden Halterahmen (37) erfolgt, der die Membran (9, 9a, 9b) allseitig einspannt und somit einen genau definierten Druckraum (15) bildet, der allseitig abgeschlossen ist und die Membran (9, 9a, 9b) in ihrer konvex gewölbten Grundstellung hält.

## Claims

1. A device for recovering energy from the kinetic energy of vehicles, which is covered on the road side by a cover plate that can be driven over by the tires (7) of the vehicle, wherein at least one compressible pressure body (9, 9a, 9b) is arranged in a recess (12), the pressure chamber (15) of which is filled with a working fluid which, when the pressure body (9, 9a, 9b) is compressed, can be displaced from the pressure chamber (15) in the direction of an accumulator and/or a working machine, wherein the cover plate is further designed as an elastically bendable bending plate (3, 3a, 3b), on the underside of which at least one vertically movable pressure stamp (5, 6) is provided in a load-transmitting manner, which engages in the recess (12) and acts on the upper side of the compressible pressure body (9, 9a, 9b) arranged there, wherein the pressure body is designed as a membrane (9, 9a, 9b) that circumferentially seals the pressure chamber (15), wherein the device comprises a concrete trough (1) that is open at the top, in which the recess (12) is provided, and the concrete trough (1) is covered towards the top by the bending plate (3), wherein under the bending plate (3) that covers the entire area of the concrete trough (1), two pressure stamps (5, 6) that are parallel to each other are provided, which absorb the deflection of the bending plate (3) and transfer it to the one or two membranes (9, 9a, 9b) located below, **characterised in that** the width of the bending plate (3), perpendicular to the direction of travel, is greater than the tire spacing of tires on an axle of a standard road vehicle, and **in that** the one or two membranes (9a, 9b) are triangular in shape, with the larger contact area in the direction of travel (11) being at the front and the smaller contact area in the direction of travel (11) being at the rear.

2. The device according to claim 1, **characterised in that** the membrane (9, 9a, 9b) is convexly curved in the unloaded position.

3. The device according to claim 1 or 2, **characterised in that** the membrane (9, 9a, 9b) is preloaded by a preliminary pressure in the pressure chamber (15) or by an elastic or fluidic preloading element.

4. The device according to any one of claims 1 to 3, **characterised in that** the pressure stamp (5, 6) extends across the width of the device and transfers the vehicle weight of the two tires of an axle.

5. The device according to any one of claims 1 to 4, **characterised in that** the bottom side of the pressure chamber (15) is sealed in a medium-tight manner by a second membrane.

6. The device according to any one of claims 1 to 5, **characterised in that** bending plates (3a, 3b) arranged one behind the other in the direction of travel (11) form an overlap joint (4) in order to enable the bending plates (3) to be driven over smoothly in the direction of travel (11).

7. The device according to any one of claims 1 to 6, **characterised in that** for low-friction displacement of the pressure stamps (5, 6) into the recess (12), lateral stop elements (13) are provided, which are designed to have low friction.

8. The device according to claim 7, **characterised in that** the stop elements (13) consist of plastic elements with low-friction sliding surfaces.

9. The device according to any one of claims 1 to 8, **characterised in that** the membrane (9) is clamped by a clamping block (20) which forms an inwardly directed vertical stop (21) on its upper side for an associated shoulder (10) of the pressure stamp (5, 6).

10. The device according to any one of claims 1 to 9, **characterised in that** the clamping of a single-layer membrane (9, 9a, 9b) is carried out with a circumferential holding frame (37) that clamps the membrane (9, 9a, 9b) on all sides and thus forms a precisely defined pressure chamber (15) that is closed on all sides and holds the membrane (9, 9a, 9b) in its convexly curved basic position.

## Revendications

1. Dispositif pour obtenir de l'énergie à partir de l'énergie cinétique de véhicules, qui est recouvert côté chaussée par une plaque de recouvrement franchissable par les pneumatiques (7) du véhicule, dans lequel au moins un corps de pression (9, 9a, 9b) compressible, dont la chambre de pression (15) est remplie d'un fluide de travail qui, lors de la compression du corps de pression (9, 9a, 9b), peut être déplacé de la chambre de pression (15) en direction d'un accumulateur et/ou d'une machine de travail, est disposé dans un évidement (12), dans lequel la plaque de recouvrement est en outre réalisée en tant que plaque de flexion (3, 3a, 3b) élastique, sur la face inférieure de laquelle au moins un piston de pression (5, 6) mobile verticalement est disposé de manière à transférer la charge, qui s'insère dans l'évidement (12) et agit sur la face supérieure du corps de pression (9, 9a, 9b) compressible disposé à cet endroit, dans lequel le corps de pression est réalisé en tant que membrane (9, 9a, 9b) étanchéifiant la périphérie de la chambre de pression (15), dans lequel le dispositif comprend une cuve en béton (1) ouverte vers le haut, disposée de manière encastrée dans la chaussée, dans laquelle est disposé l'évidement (12), et la cuve en béton (1) est recouverte vers le haut par la plaque de flexion (3), dans lequel deux pistons de pression (5, 6) parallèles l'un à l'autre sont prévus sous la plaque de flexion (3) recouvrant toute la surface de la cuve en béton (1), qui absorbent la flexion de la plaque de flexion (3) et la transmettent aux une ou deux membranes (9, 9a, 9b) situées en dessous, **caractérisé en ce que** la largeur de la plaque de flexion (3) perpendiculairement à la direction de la marche est plus grande qu'une distance entre pneumatiques des pneumatiques d'un essieu d'un véhicule à moteur usuel sur route, et que les une ou deux membranes (9a, 9b) sont réalisées de manière triangulaire, dans lequel la plus grande surface de contact au sol dans la direction de la marche (11) est à l'avant et la plus petite surface de contact au sol dans la direction de la marche (11) à l'arrière.

2. Dispositif selon la revendication 1, **caractérisé en ce que** la membrane (9, 9a, 9b) est convexe dans la position non sollicitée.

3. Dispositif selon la revendication 1 ou 2, **caractérisé en ce que** la membrane (9, 9a, 9b) est précontrainte par une prépression dans la chambre de pression (15) ou un élément de précontrainte élastique ou fluidique.

4. Dispositif selon l'une des revendications 1 à 3, **caractérisé en ce que** le piston de pression (5, 6) s'étend sur la largeur du dispositif et transmet le poids du véhicule des deux pneumatiques d'un essieu.

5. Dispositif selon l'une des revendications 1 à 4, **caractérisé en ce que** le côté fond de la chambre de pression (15) est fermé par une seconde membrane étanche au milieu.

6. Dispositif selon l'une des revendications 1 à 5, **caractérisé en ce que** des plaques de flexion (3a, 3b) situées l'une derrière l'autre dans la direction de la marche (11) forment un joint de chevauchement (4) pour permettre un franchissement sans à-coups des plaques de flexion (3) dans la direction de la marche (11).

7. Dispositif selon l'une des revendications 1 à 6, **caractérisé en ce que** des éléments de butée (13) latéraux sont présents dans l'évidement (12) pour le déplacement à faible frottement des pistons de pression (5, 6), qui sont réalisés à faible frottement.

8. Dispositif selon la revendication 7, **caractérisé en ce que** les éléments de butée (13) sont constitués d'éléments en matière plastique avec des surfaces de glissement à faible frottement.

9. Dispositif selon l'une des revendications 1 à 8, **caractérisé en ce que** le serrage de la membrane (9) s'effectue par un bloc de serrage (20) qui forme sur sa face supérieure une butée verticale (21) orientée vers l'intérieur pour une embase (10) associée du piston de pression (5, 6).

10. Dispositif selon l'une des revendications 1 à 9, **caractérisé en ce que** le serrage d'une membrane (9, 9a, 9b) monocouche s'effectue avec un cadre de maintien (37) périphérique, qui serre la membrane (9, 9a, 9b) sur tous les côtés et forme ainsi une chambre de pression (15) précisément définie, qui est fermée sur tous les côtés et maintient la membrane (9, 9a, 9b) dans sa position de base convexe.
